# EUROPEAN PATENT SPECIFICATION

(11) **EP 2 830 805 B1**
(45) Date of publication and mention of the grant of the patent: **31.07.2019**
(21) Application number: 13711435.1
(22) Date of filing: 22.03.2013
(51) Int. Cl.: B23K 1/005, B23K 1/018, B23K 1/00

(54) **METHOD FOR PROCESSING A MODULAR HYBRID COMPONENT**
VERFAHREN ZUR VERARBEITUNG EINER MODULAREN HYBRIDEN KOMPONENTE
PROCÉDÉ DE TRAITEMENT D'UN ÉLÉMENT HYBRIDE MODULAIRE

(30) Priority: 28.03.2012 EP 12161875
(43) Date of publication of application: 04.02.2015
(73) Proprietor: Ansaldo Energia IP UK Limited, London W1G 9DQ (GB)
(72) Inventor: BECKEL, Daniel, CH-5430 Wettingen (CH); STANKOWSKI, Alexander, CH-5303 Wuerenlingen (CH); DUVAL, Sophie Betty Claire, CH-8004 Zurich (CH)
(74) Representative: Bernotti, Andrea
(86) International application number: PCT/EP2013/056148
(87) International publication number: WO 2013/144035

(56) References cited:
- DE-C1- 19 541 299
- US-A- 6 054 693
- D.E. Clark and D.C. Folz: "Introduction: What is Microwave Processing?", Microwave Solutions for Ceramic Engineers (Wiley) , 2006, XP002682590, ISBN: 978-1-57498-224-4 Retrieved from the Internet: URL:http://personnel.univ-reunion.fr/lanso n/typosite/fileadmin/documents/pdf/TMO_M2/ Projet/Microwave_Solutions_for_Engineers_I ntroduction.pdf [retrieved on 2012-08-30]

## Description

### BACKGROUND OF THE INVENTION

The present invention relates to modular hybrid components in the field of gas turbine technology. It refers to a method for processing a modular hybrid component according to the preamble of claim 1.

### PRIOR ART

Modern, next generation gas turbine hot gas path components consist of more than one material (see for example EP 1 362 983 A2, US 2010/0166551 A1, EP 2 017 433 A2, EP 2 108 785 A2, US 2010/0074759 A1 or US 7,452,189 B2) to adjust the properties of each region of the component to its environment.

Very often those parts consist of ceramic and metal sections to make use of the higher temperature capability of the ceramic where needed and of the strength / and/or toughness of the metal where needed.

After completion of one service interval, the components need to be disassembled and worn pieces need to be replaced. Typically the ceramic part cannot be reworked and will be replaced, while the metal part can be reused or reworked (e.g. crack brazing). Such modular parts are often joined together by brazing (see US 2008/0056888 A1, US 2008/0307793 A1).

Limited information is available on disassembly of modular parts. US 2008/0229567 A1 discloses a process that intends to leach out only a ceramic matrix in which ceramic fibres are embedded and to restore the ceramic afterwards by infiltration. However, the leaching process is not disclosed. Furthermore, the leaching process would only be suitable for a local repair of the ceramic part, which is very unlikely considering the brittle behaviour of ceramics and does not take advantages of the modular design of the component, which aims at replacing worn pieces instead of doing repair, which anyway can only cope with limited damages.

Especially, when considering multiple reconditioning or heavy damages of gas turbine parts, a disassembly is unavoidable. Thus, although US 2008/0229567 A1 provides a process that is beneficial for some niche applications, it does not solve the problem of how to efficiently remove the ceramic part from the metallic part.

Another process known in the art for disassembling of brazed parts is de-brazing, i.e. subjecting the entire component to high temperatures in a furnace in order to re-melt the braze alloy. However, this requires temperatures exceeding the original braze temperature, since the melting point depressants have diffused during service operation and thus the liquidus temperature of the braze joint has increased.

Therefore, the metal part component is prone to thermal deterioration. In addition, the braze alloy is only re-melt but not dissolved, i.e. residues are still attached to the joining surfaces even if the parts can be separated. However, these joining surfaces have complicated geometries and tight tolerances, so that every mechanical cleaning of the joining surfaces risks modifying their geometry beyond the tolerance.

The US 6,054,693 discloses a method enabling controlled selective heating of workpiece components during microwave brazing. Two workpiece components are joined by melting an adhesion interlayer material between the two components. An indication of when the interlayer has melted is provided. The temperature difference across the braze assembly is monitored and adjusted via a feedback loop to reduce stresses in the braze joint resulting in a stronger braze joint.

### SUMMARY OF THE INVENTION

It is an object of the present invention to provide a method for processing a modular hybrid component in order so disassemble said component, wherein one part is not substantially affected and can thus be reused after disassembly.

These and other objects are obtained by a method according to claim 1.

The inventive method for processing a modular hybrid component comprising a first part made of a first material, a second part made of a second material, which is different from said first material with regard to its electromagnetic and/or thermal properties, and a brazing or soldering joint or a field sensitive mineral cement connecting said first and second part, wherein that said modular hybrid component is exposed to an alternating electromagnetic field, whereby both parts are heated up differently, and the brazing or soldering joint or field sensitive mineral cement between said first part and said second part is affected by said heating action, which leads to at least a softening of the brazing or soldering joint or the field sensitive material between said two parts, such that the two parts can be separated.

According to an embodiment of the invention said first part is a metal part and said second part is a ceramic part, and said alternating electromagnetic field has a frequency of more than 1 kHz.

Specifically, said alternating electromagnetic field has a frequency of more than 1GHz.

According to another embodiment of the invention said electromagnetic field is confined in a chamber in a multimode configuration.

Specifically, an atmosphere exists in said chamber during execution of the process, which atmosphere contains less than ambient oxygen partial pressure.

More specifically, the total pressure in said chamber during execution of the process is less than 1mbar, specifically less than 10⁻⁴ mbar.

According to a further embodiment of the invention said chamber contains an atmosphere, which is inert or reducing.

With the disclosed selective heating of the ceramic part (which is more temperature tolerant than the metal and is anyway replaced during service/repair in most cases), the metal part is not substantially affected and can thus be reused after de-brazing or de-cementing by selective heat input.

### BRIEF DESCRIPTION OF THE DRAWINGS

The present invention is now to be explained more closely by means of different embodiments and with reference to the attached drawing.

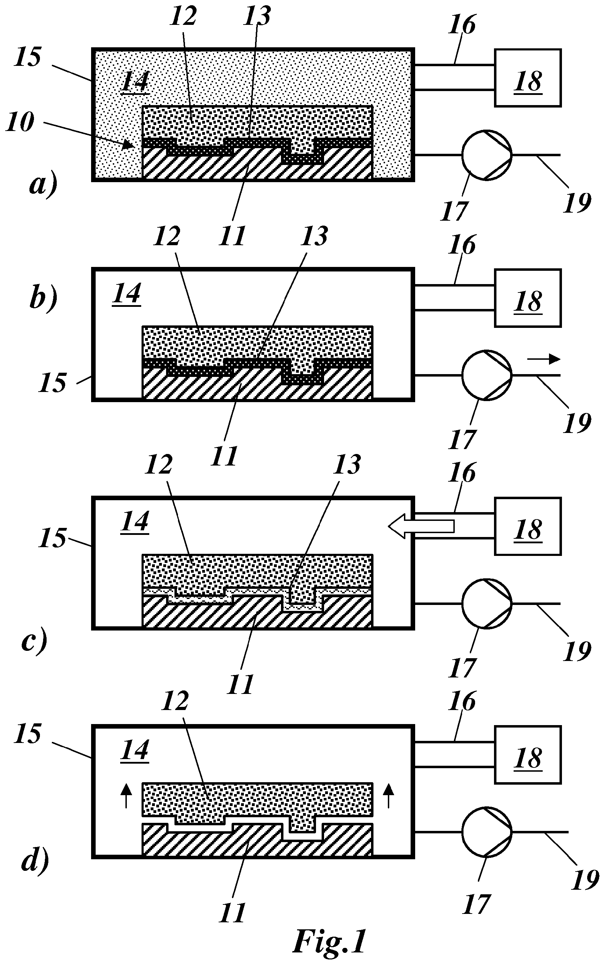

- Fig. 1: shows different steps in a method for separating the ceramic part from the metal part of a hybrid metal/ceramic component being exposed in a chamber to microwave radiation according to an embodiment of the invention.

### DETAILED DESCRIPTION OF DIFFERENT EMBODIMENTS OF THE INVENTION

Fig. 1 shows different steps in a method for separating the ceramic part 12 from the metal part 11 of a hybrid metal/ceramic component 10 being exposed in a chamber 15 to microwave radiation according to an embodiment of the invention.

The process starts with a component 10, which comprises a metal part 11, which is joined with a ceramic part 12 by means of a joint layer 13 (Fig. 1(a)).

The component 10 is put into a chamber 15, in which a microwave radiation field can be established by means of a microwave source 18, which is connected to the chamber 15 by microwave line 16. The inner space 14 of the chamber 15 can be pumped out or evacuated by means of pump 17 through a pumping line 19.

After being evacuated (Fig. 1(b)), the inner space 14 of the chamber 15 with the hybrid component 10 is subjected to microwave radiation emitted by the microwave source 18 (Fig. 1(c)).

The microwave radiation results in a selective heating of the ceramic part 12, which leads to a melting of the joint layer 13, such that the metal part 11 and ceramic part 12 are finally separated (Fig. 1(d)).

### 1. Example:

Disassembly of a modular hybrid part, having a ceramic airfoil manufactured from CMC (Ceramic Matrix Composite) with a high SiC content that is attached to a load carrying metallic spar and a platform (both manufactured from superalloys) by brazing
- Aim: remove the damaged ceramic airfoil, without deterioration of the superalloy platform and spar;
- Process: the part is subjected to a 2.45GHz multimode microwave in high vacuum (< 10⁻⁴mbar);
- Result: due to the strong coupling of the SiC with the microwave, a strong heating of the SiC occurs, while the bulk metal is mainly heated by conduction from the SiC through the braze joint and thus significantly colder. The braze joint melts due to the heat conduction from the SiC and can thus be separated. The heat input received from the metal is not sufficient to affect the microstructure of the superalloy; thus the superalloy can be reused.

### 2. Example:

Removal of ceramic tiles consisting of YSZ from a combustor liner fabricated from a superalloy:
- Aim: remove the worn tiles, without deterioration of the superalloy liner;
- Process: the part is subjected to a 2.45GHz multimode microwave in high vacuum (< 10⁻⁴mbar);
- Result: due to the stronger coupling of the YSZ with the microwave, a strong heating of the YSZ occurs, while the bulk metal is mainly heated by conduction from the YSZ through the braze joint and thus significantly colder. The braze joint melts due to the heat conduction from the YSZ and can thus be separated. The heat input received from the metal is not sufficient to affect the microstructure of the superalloy, thus the superalloy can be reused.

Thus, the process of reconditioning of modular gas turbine hot gas path parts that consist of metallic and ceramic components or different ceramic components, is improved, whereby only one part is removed by the described de-brazing process resp. de-cementing process and a new part is joined by the described joining process.

### LIST OF REFERENCE NUMERALS

- 10: hybrid component (gas turbine)
- 11: metal part
- 12: ceramic part
- 13: joint layer
- 14: inner space
- 15: chamber
- 16: microwave line
- 17: pump
- 18: microwave source
- 19: pumping line

## Claims

1. Method for processing a modular hybrid component (10), said component (10) comprising a first part (11) made of a first material, a second part (12) made of a second material, which is different from said first material with regard to its electromagnetic and/or thermal properties, and a brazing or soldering joint (13) or a field sensitive mineral cement connecting said first and second part (11), wherein said modular hybrid component (10) is exposed to an alternating electromagnetic field, whereby both parts (11,12) are heated up differently, and the brazing or soldering joint (13) or field sensitive mineral cement between said first part (11) and said second part (12) is affected by said heating action, **characterized in that** said heating process leads to at least a softening or a melting of the brazing or soldering joint (13) or the filed sensitive material between said two parts (11,12), such that the two parts can be separated.

2. Method according to claim 1, **characterized in that** said first part (11) is a metal part and said second part (12) is a ceramic part, and said alternating electromagnetic field has a frequency of more than 1kHz.

3. Method according to claim 2, **characterized in that** said alternating electromagnetic field has a frequency of more than 1GHz.

4. Method according to one of the claims 1 to 3, **characterized in that** said electromagnetic field is confined in a chamber (15) in a multimode configuration.

5. Method according to claim 4, **characterized in that** an atmosphere exists in said chamber (15) during execution of the process, which atmosphere contains less than ambient oxygen partial pressure.

6. Method according to claim 5, **characterized in that** the total pressure in said chamber (15) during execution of the process is less than 1mbar, specifically less than 10⁻⁴ mbar.

7. Method according to one of the claims 1 to 3, **characterized in that** said chamber (15) contains an atmosphere, which is inert or reducing.

## Patentansprüche

1. Verfahren, um ein modulares hybrides Bauteil (10) zu bearbeiten, wobei das Bauteil (10) einen ersten Teil (11), der aus einem ersten Material hergestellt ist, und einen zweiten Teil (12), der aus einem zweiten Material, das vom ersten Material hinsichtlich seiner elektromagnetischen und/oder thermischen Eigenschaften verschieden ist, hergestellt ist, und eine Hartlot- oder Lötverbindung (13) oder einen feldempfindlichen Mineralzement, die bzw. der den ersten und den zweiten Teil (11) verbindet, umfasst, wobei das modulare hybride Bauteil (10) einem elektromagnetischen Wechselfeld ausgesetzt ist, wodurch beide Teile (11, 12) verschieden aufgeheizt werden und die Hartlot- oder Lötverbindung (13) oder der feldempfindliche Mineralzement zwischen dem ersten Teil (11) und dem zweiten Teil (12) durch die Heizwirkung beeinflusst wird, **dadurch gekennzeichnet, dass** der Heizvorgang mindestens zu einem Aufweichen oder einem Schmelzen der Hartlot- oder Lötverbindung (13) oder des feldempfindliche Materials zwischen den zwei Teilen (11, 12) führt, derart, dass die zwei Teile getrennt werden können.

2. Verfahren nach Anspruch 1, **dadurch gekennzeichnet, dass** der erste Teil (11) ein Metallteil ist und der zweite Teil (12) ein Keramikteil ist und das elektromagnetische Wechselfeld eine Frequenz von mehr als 1 kHz aufweist.

3. Verfahren nach Anspruch 2, **dadurch gekennzeichnet, dass** das elektromagnetische Wechselfeld eine Frequenz von mehr als 1 GHz aufweist.

4. Verfahren nach einem der Ansprüche 1 bis 3, **dadurch gekennzeichnet, dass** das elektromagnetische Feld in einer Kammer (15) in einer Mehrmodenkonfiguration eingeschlossen ist.

5. Verfahren nach Anspruch 4, **dadurch gekennzeichnet, dass** in der Kammer (15) während der Ausführung des Vorgangs eine Atmosphäre existiert, wobei die Atmosphäre weniger als den Umgebungssauerstoffpartialdruck hat.

6. Verfahren nach Anspruch 5, **dadurch gekennzeichnet, dass** der Gesamtdruck in der Kammer (15) währende der Ausführung des Vorgangs weniger als 1 mbar, insbesondere weniger als 10⁻⁴ mbar ist.

7. Verfahren nach einem der Ansprüche 1 bis 3, **dadurch gekennzeichnet, dass** die Kammer (15) eine Atmosphäre enthält, die inert oder reduzierend ist.

## Revendications

1. Procédé pour traiter un composant hybride modulaire (10), ledit composant (10) comprenant une première partie (11) constituée d'un premier matériau, une deuxième partie (12) constituée d'un deuxième matériau, qui est différent dudit premier matériau en ce qui concerne ses propriétés électromagnétiques et/ou thermiques, et un joint de brasure ou de soudure (13) ou un ciment minéral sensible à un champ reliant lesdites première et deuxième parties (11),
dans lequel ledit composant hybride modulaire (10) est exposé à un champ électromagnétique alternatif, moyennant quoi les deux parties (11, 12) sont chauffées différemment, et le joint de brasure ou de soudure (13) ou le ciment minéral sensible à un champ entre ladite première partie (11) et ladite deuxième partie (12) est affecté par ladite action de chauffage,
**caractérisé en ce que** ledit processus de chauffage mène au moins à un ramollissement ou à une fusion du joint de brasure ou de soudure (13) ou du matériau sensible à un champ entre lesdites deux parties (11, 12), de sorte que les deux parties peuvent être séparées.

2. Procédé selon la revendication 1, **caractérisé en ce que** ladite première partie (11) est une partie métallique et ladite deuxième partie (12) est une partie en céramique, et ledit champ électromagnétique alternatif a une fréquence supérieure à 1 kHz.

3. Procédé selon la revendication 2, **caractérisé en ce que** ledit champ électromagnétique alternatif a une fréquence supérieure à 1 GHz.

4. Procédé selon l'une des revendications 1 à 3, **caractérisé en ce que** ledit champ électromagnétique est confiné dans une chambre (15) dans une configuration multimode.

5. Procédé selon la revendication 4, **caractérisé en ce qu'**une atmosphère existe dans ladite chambre (15) pendant l'exécution du processus, laquelle atmosphère contient moins qu'une pression partielle d'oxygène ambiant.

6. Procédé selon la revendication 5, **caractérisé en ce que** la pression totale dans ladite chambre (15) pendant l'exécution du processus est inférieure à 1 mbar, spécifiquement inférieure à 10⁻⁴ mbar.

7. Procédé selon l'une des revendications 1 à 3, **caractérisé en ce que** ladite chambre (15) contient une atmosphère, qui est inerte ou réductrice.
